# EUROPÄISCHE PATENTSCHRIFT

(11) **EP 3 068 562 B1**
(45) Veröffentlichungstag und Bekanntmachung des Hinweises auf die Patenterteilung: **09.09.2020**
(21) Anmeldenummer: 14790596.2
(22) Anmeldetag: 29.10.2014
(51) Int. Cl.: B22C 23/00, B22D 33/00, B22D 43/00, B24C 3/04, B29C 33/72

(54) **WARTUNGSSTATION FÜR GIESSWERKZEUGE UND VERFAHREN ZUM WARTEN EINES GIESSWERKZEUGES**
MAINTENANCE STATION FOR CASTING MOULDS AND MAINTENANCE METHOD FOR A CASTING MOULD
STATION D'ENTRETIEN D'OUTILS DE COULÉE ET PROCÉDÉ D'ENTRETIEN D'UN OUTIL DE COULÉE

(30) Priorität: 15.11.2013 DE 102013223311
(43) Veröffentlichungstag der Anmeldung: 21.09.2016
(73) Patentinhaber: Bayerische Motoren Werke Aktiengesellschaft, 80809 München (DE)
(72) Erfinder: REGUSEWICZ, Franz, 110016 Shenyang/Shenhe District (CN)
(74) Vertreter: Duca, Christian
(86) Internationale Anmeldenummer: PCT/EP2014/073175
(87) Internationale Veröffentlichungsnummer: WO 2015/071098

(56) Entgegenhaltungen:
- EP-A1- 0 824 983
- EP-A1- 1 702 717
- CN-U- 201 511 108
- JP-A- S63 137 542
- KR-A- 20130 120 131

## Beschreibung

Die Erfindung betrifft eine Wartungsstation für Gießwerkzeuge sowie ein Verfahren zum Warten eines Gießwerkzeugs.

Zum Herstellen von Gussbauteilen werden sogenannte Kokillen als Gießwerkzeuge verwendet. Diese Gießwerkzeuge können mehrteilig aufgebaut sein, bspw. in zweiteiliger Form aus einer unteren Werkzeughälfte und einer oberen Werkzeughälfte. In die Kokille wird eine flüssige Metallschmelze eingebracht, die aushärtet und in erstarrtem Zustand das Gussbauteil oder eine Vorstufe des Gussbauteils, ein sogenanntes Halbzeug, bildet. Nachdem das Gussbauteil zumindest teilweise ausgehärtet ist, so dass es eine ausreichende Formstabilität aufweist, kann es aus dem Gießwerkzeug entnommen werden. Mit der Zeit bilden sich auf der formgebenden Oberfläche der Werkzeuge, d.h. auf der Werkzeugoberfläche, die mit dem fließfähigen Metall in Kontakt gerät, Ablagerungen durch die einzelnen Gießvorgänge. Ferner, ist auf der formgebenden Oberfläche der Werkzeuge, eine Beschichtung vorgesehen, die durch die wiederholten Gießvorgänge verschleißt.
Durch die Bildung von Ablagerungen, sowie durch den Verschleiß der Beschichtung, wird die Maßhaltigkeit der mit der Werkzeugform hergestellten Bauteile reduziert, wodurch Qualitätseinbußen entstehen. Darüber hinaus erfolgt auch eine Prozessbeeinflussung durch die Verschleißerscheinungen am Werkzeug.

Bislang wird im Stand der Technik das Werkzeug von Hand am Gießplatz gereinigt. Nach der Reinigung wird die Formoberfläche mit einer Schlichte versehen, und damit eine neue Beschichtung aufgetragen. Da die Reinigung und die Beschichtung unmittelbar am Gießplatz stattfinden, weist das Werkzeug eine Temperatur im Bereich von ca. 350 °C auf. Hieraus ergibt sich eine große thermische Belastung für das Reinigungspersonal. Darüber hinaus werden abgetragene Schlichte-Rückstände in Form von Staub aufgewirbelt, die von dem Mitarbeiter eingeatmet werden können. Nicht zuletzt entsteht durch die Reinigung und Beschichtung des Werkzeugs am Gießplatz eine Produktionsunterbrechung.

Aus der EP 1 702 717 A1 ist eine Sandstrahlvorrichtung mit einer Sandstrahlkabine und einem Roboter mit einem Roboterarm zur Bedienung einer Sandstrahldüse bekannt, wobei eine Fenstermanschette mit einem Grundkörper und zwei Anschlussflanschen zur flexiblen Abdichtung an einer Öffnung in der Sandstrahlkabine angebracht ist.

Aus der JP S63 137542 A ist eine Reinigungskammer bekannt, in der mit Hilfe einer Einsprühdüse abrasives Material eingebracht wird, zur Reinigung von Gusskästen.

Die CN 201 511 108 U betrifft eine Oberflächenreinigungs- und Beschichtungs-Montagelinie für Gießwerkzeuge mit der die Arbeitsumgebung erheblich verbessert wird.

Ausgehend von diesem Stand der Technik macht es sich die vorliegende Erfindung zur Aufgabe, eine Vorrichtung sowie ein vereinfachtes Verfahren zum Warten anzugeben, mit der/dem die Nachteile des Standes der Technik überwunden werden. Ferner ist es Aufgabe der Erfindung, eine solche Wartungsstation bzw. ein Verfahren zum Warten von Gießwerkzeugen anzugeben, welches weitestgehend selbstständig ausführbar ist.

Diese Aufgabe wird durch ein Verfahren mit den Merkmalen des unabhängigen Anspruchs 9 und mit einer Vorrichtung mit den Merkmalen des unabhängigen Anspruchs 1 gelöst. Die abhängigen Ansprüche stellen vorteilhafte Ausführungsformen der Erfindung dar.

Zur Lösung dieser Aufgabe schlägt die Erfindung eine Wartungsstation für Gießwerkzeuge vor, mit einer Handling-Einrichtung, an der eine Sprüheinrichtung angeordnet ist, wobei mit der Sprüheinrichtung ein Reinigungsmedium auf eine Oberfläche mindestens eines Gießwerkzeuges aufsprüh- oder aufstrahlbar ist, wobei das Reinigungsmedium ein Gemisch aus Druckluft und abrasiven Partikeln ist.

Die abrasiven Partikel sind erfindungsgemäß als Eispartikel und/oder Salzkörner ausgebildet.

Weiterhin ist die Handling-Einrichtung als Roboter ausgebildet. Durch diesen Aufbau kann auf besonders einfache Weise die Formoberfläche des Gießwerkzeugs gereinigt werden.

Darüber hinaus ist ein Strahlgerät vorgesehen, in dem das Reinigungsmedium gelagert ist. Das Reinigungsmedium kann über eine Zuführeinrichtung mit der Sprüheinrichtung verbunden sein.

Weiterhin ist eine Beschichtungseinrichtung vorgesehen, mit der eine Beschichtung auf die Oberfläche des Werkzeugs aufbringbar ist.

Erfindungsgemäß ist in einer ersten Ausführungsform die Beschichtungseinrichtung an der Handling-Einrichtung vorgesehen, an der auch die Sprüheinrichtung angeordnet ist. Alternativ dazu ist in einer zweiten Ausführungsform der Erfindung die Beschichtungseinrichtung an einer gesonderten Handling-Einrichtung angeordnet.

Darüber hinaus kann an der Wartungsstation eine Lärmschutzeinrichtung vorgesehen sein. Dadurch werden Lärmemissionen reduziert und die Arbeitssicherheit sowie die Arbeitsergonomie erhöht.

Zusätzlich oder alternativ kann eine Absaugeinrichtung vorgesehen sein, zur Absaugung der bei der Reinigung aufgewirbelten Ablagerungsreste. Dadurch kann verhindert werden, dass sich dieser Staub in der Umgebung der Reinigungsstation niederschlägt, bzw. von einem Bediener eingeatmet wird.

In einem weiteren Aspekt betrifft die Erfindung ein Verfahren zum Warten eines Gießwerkzeugs mit einer im Vorhergehenden beschriebenen Wartungsstation, mit den Schritten: Entfernen des Gießwerkzeugs von dem Gießplatz, Überführen des Gießwerkzeuges zu der Wartungsstation, Entfernen von Gießresten, die sich auf der Oberfläche des Gießwerkzeuges befinden, durch Abstrahlen oder Absprühen der Oberfläche mit einem Reinigungsmedium, Aufbringen einer Beschichtung auf die Werkzeugoberfläche und Überführen des Gießwerkzeuges zu dem Gießplatz. Dadurch kann das Gießwerkzeug an einem Wartungsort und damit nicht unmittelbar am Gießplatz gewartet werden, so dass das Wartungspersonal nicht mit einer derart hohen Temperatur beaufschlagt wird, wie im Stand der Technik.

Darüber hinaus kann nach dem Entfernen eines ersten Gießwerkzeuges von dem Gießplatz ein zweites, gewartetes Gießwerkzeug in den Gießplatz eingebracht werden. Dies bietet den Vorteil, dass am Gießplatz unmittelbar weiter produziert werden kann, so dass Produktionsausfallzeiten auf ein Mindestmaß reduziert werden.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigt in schematischer Darstellung:

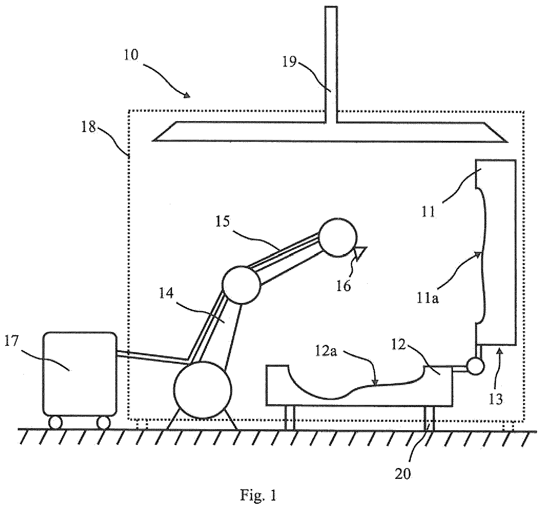

Fig. 1 den prinzipiellen Aufbau einer Wartungsstation für Gießwerkzeuge, gemäß der vorliegenden Erfindung.

In Fig. 1 ist eine Wartungsstation 10 für Gießwerkzeuge 13 schematisch dargestellt. Das Gießwerkzeug 13 ist zweiteilig aufgebaut, mit einem Oberwerkzeug 11 und einem Unterwerkzeug 12. Diese Werkzeughälften 11, 12 sind miteinander schwenk- oder drehbar verbunden, so dass das Werkzeug 13 in eine offene Position und in eine geschlossene Position überführbar ist. Fig. 1 zeigt eine offene Position. In der geschlossenen Position bilden die Werkzeughälften 11, 12 eine Kavität aus, in die das Formteil eingegossen wird. Die inneren Werkzeugoberflächen 11a bzw. 12a bilden dann die Formoberflächen für das herzustellende Bauteil.

Das Gießwerkzeug 13 wird von dem Gießplatz entfernt und wie in Fig. 1 dargestellt, in die Wartungsstation 10 eingebracht. Dabei wird es in einer vorbestimmten Position zu einer Handling-Einrichtung 14, bspw. einem Roboter ausgerichtet. Hierzu können Positionierhilfen vorgesehen sein, bspw. Anschlagelemente, oder Einrastmulden, in denen das Gießwerkzeug 13 relativ zu einem Werkhallenboden einrastet. Alternativ dazu können auch Stützträger 20 vorgesehen sein, die das Gießwerkzeug 13 aufnehmen und somit vorbestimmt zum Roboter 14 ausrichten.

An dem Roboter 14 ist eine Sprüheinrichtung 16 vorgesehen. Die Sprüheinrichtung 16 ist über eine Zuführeinrichtung 15 mit einem Strahlgerät 17 verbunden. Das Strahlgerät 17 umfasst ein Reservoir, in dem abrasive Partikel, insbesondere Eis, Salz- und/oder Sandkörner gelagert sind. Diese werden über die Zuführeinrichtung, bspw. eine Leitung 15 zur Sprüheinrichtung 16 zugeführt. Aus der Sprüheinrichtung 16 wird das Reinigungsmedium, d.h. die Druckluft vermischt mit den abrasiven Partikeln auf die Formoberflächen 11a, 11b des Gießwerkzeuges 13 aufgesprüht. Dadurch werden beide Werkzeughälften 11, 12 mit dem Reinigungsmedium bestrahlt und von Ablagerung bzw. Beschichtungsresten gesäubert. Hierzu fährt die Handling-Einrichtung 14 den Strahlkopf 16 über die Formoberflächen 11a, 12a selbsttätig, so dass die Formoberflächen vollständig von Rückständen bzw. Beschichtungen gereinigt werden. Der Strahldruck, mit dem das Reinigungsmedium auf die Formoberflächen 11a, 12a gestrahlt wird, beträgt zwischen 4 und 8 bar, bevorzugt 6 bar.

Durch die genaue Positionierung des Gießwerkzeugs 13 relativ zu dem Handling-Roboter 14, kann der Handling-Roboter 14 oder eine mit dem Roboter 14 verbundene Steuerungseinheit bzw. Regelungseinheit für jedes Gießwerkzeug 13 einmal eingelernt werden. Hierzu wird durch das Werkstattpersonal der Roboter 14 von Hand geführt und ein erstes Werkzeug eines Typs gereinigt. Die dabei durchgeführte Bewegungsbahn der Sprüheinrichtung 16 wird gespeichert und hinterlegt. Nachfolgende Gießwerkzeuge 13, des gleichen Typs werden dann selbsttätig von dem Roboter 14 gereinigt.

Im Anschluss daran wird eine neue Schlichte auf die Formoberflächen 11a, 12a aufgebracht. Diese Schlichte kann bspw. eine Beschichtung aus Keramik sein. Hierzu kann eine Beschichtungseinrichtung, in Fig. 1 nicht dargestellt, an dem Roboter 14 vorgesehen sein. Der Roboter führt diese Beschichtungseinrichtung über die Formflächen 11a, 12a, um diese mit einer keramischen Beschichtung zu versehen. Nachdem die Formoberflächen 11a, 12a vollständig beschichtet wurden, ist der Wartungsvorgang an dem Gießwerkzeug abgeschlossen. Das Gießwerkzeug 13 kann aus der Wartungsstation 10 entnommen werden und zurück zum Gießplatz gebracht werden.

Zur Schallisolierung kann ein Lärmschutz 18 an der Wartungsstation 10 vorgesehen sein. Dieser Lärmschutz 18 kann bspw. aus Lärmschutzwänden ausgebildet sein, die um die Handling-Einrichtung 14 und das Gießwerkzeug 13 herum angeordnet sind. Der Lärmschutz 18 kann nach oben hin offen oder auch geschlossen sein.

Weiterhin ist in Fig. 1 eine Absaugeinrichtung 19 vorgesehen, die beispielhaft im oberen Bereich der Wartungsstation 10 angeordnet ist. Alternativ dazu kann die Absaugeinrichtung 19 auch seitlich angebracht sein. Mit der Absaugeinrichtung 19 wird der Staub, der beim Reinigen entsteht abgesaugt. In einer weiteren, alternativen Ausführungsform kann die Absaugung direkt an der Handling-Einrichtung 14 vorgesehen sein. Dadurch wird aufgewirbelter Staub, mit Beschichtungsresten unmittelbar an der Oberfläche des Werkzeugs 13 abgefangen und abgesaugt.

Im Folgenden sollen die Vorteile der Erfindung kurz zusammengefasst werden. Durch selbsttätige Reinigung der Gießwerkzeuge mit Hilfe einer Handling-Einheit wird die Mitarbeiterbelastung reduziert und unnötige Verunreinigung am Gießplatz verhindert. Darüber hinaus bietet eine selbsttätige Wartung mittels eines Roboters eine wiederholgenaue Reinigung und Beschichtung des Werkzeugs. Nicht zuletzt bietet diese Erfindung den Vorteil, dass pro Zeiteinheit mehrere Formteile ausgebracht werden können, da die Verwendung des Gießplatzes nur kurzzeitig unterbrochen ist.

## Patentansprüche

1. Wartungsstation (10) für Gießwerkzeuge mit einer Handlingseinrichtung (14), an der eine Sprüheinrichtung (16) angeordnet ist, wobei mit der Sprüheinrichtung (16) ein Reinigungsmedium auf Formoberflächen (11a, 12a) mindestens eines Gießwerkzeugs (13) aufsprühbar ist, wobei das Reinigungsmedium ein Gemisch aus Druckluft und abrasiven Partikel ist,
**dadurch gekennzeichnet, dass**
- die abrasiven Partikel als Eispartikel und/oder Salzkörner ausgebildet sind,
- die Handlingseinrichtung (14) als Roboter ausgebildet ist, mit dem die Sprüheinrichtung (16) selbsttätig über die Formoberflächen (11a, 12a) des Gießwerkzeugs verfahrbar ist, wobei die Sprüheinrichtung (16) über eine Zuführeinrichtung (15) mit einem Strahlgerät (17) verbunden ist, wobei das Strahlgerät (17) ein Reservoir umfasst, in dem die abrassiven Partikel gelagert sind, die über die Zuführeinrichtung (15) zu der Sprüheinrichtung (16) zuführbar sind, und dass
- eine Beschichtungseinrichtung vorgesehen ist, mit der eine Beschichtung auf die Oberfläche (11a, 12a) des Gießwerkzeugs aufbringbar ist wobei
• die Beschichtungseinrichtung an der Handlingseinrichtung (14) vorgesehen ist, an der die Sprüheinrichtung (16) angeordnet ist, oder
• die Beschichtungseinrichtung an einer gesonderten Handlingseinrichtung (14) angeordnet ist..

2. Wartungsstation (10) nach Anspruch 1, **dadurch gekennzeichnet, dass** ein Strahlgerät (17) vorgesehen ist, in dem das Reinigungsmedium gelagert ist und das über eine Zuführeinrichtung (15) mit der Sprüheinrichtung (16) verbunden ist.

3. Wartungsstation (10) nach einem der vorhergehenden Ansprüche 1 oder 2, **dadurch gekennzeichnet, dass** ein Lärmschutzeinrichtung (18) vorgesehen ist.

4. Wartungsstation (10) nach einem der vorhergehenden Ansprüche 1 bis 3, **dadurch gekennzeichnet, dass** eine Absaugeinrichtung (19) vorgesehen ist.

5. Verfahren zum Warten eines Gießwerkzeugs mit einer Wartungsstation (10) nach einem der vorhergehenden Ansprüche, mit den Schritten:
- Entfernen des Gießwerkzeugs (10) von dem Gießplatz;
- Überführen des Gießwerkzeugs (10) zu der Wartungsstation (10);
- Entfernen von Gießresten, die sich auf der Oberfläche (11a, 12a) des Gießwerkzeugs (11, 12) befinden, durch abstrahlen oder absprühen der Oberfläche (11a, 12a) mit einem Reinigungsmedium, wobei eine Sprüheinrichtung (16) selbsttätig über die Formberflächen (11a, 12a) verfahrbar ist;
- Aufbringen einer Beschichtung auf die Werkzeugoberflächen (11a, 12a) und
- Überführen des Gießwerkzeugs (10) zu dem Gießplatz.

6. Verfahren nach Anspruch 5, **dadurch gekennzeichnet, dass** nach dem Entfernen eines ersten Gießwerkzeugs (10) von dem Gießplatz ein zweites gewartetes Gießwerkzeug in den Gießplatz eingebracht wird.

## Claims

1. Maintenance station (10) for casting moulds, having a handling installation (14) on which a spray installation (16) is disposed, wherein a cleaning medium by way of the spray installation (16) is able to be sprayed onto the mould surfaces (11a, 12a) of at least one casting mould (13), wherein the cleaning medium is a mixture of compressed air and abrasive particles,
**characterized in that**
- the abrasive particles are configured as ice particles and/or salt granules;
- the handling installation (14) is configured as a robot by way of which the spray installation (16) in a self-acting manner is repositionable across the mould surfaces (11a, 12a) of the casting mould, wherein the spray installation (16) by way of a supply installation (15) is connected to a blasting apparatus (17), wherein the blasting apparatus (17) comprises a reservoir in which the abrasive particles which by way of the supply installation (15) are able to be supplied to the spray installation (16) are stored, and **in that**
- a coating installation by way of which a coating is able to be applied to the surface (11a, 12a) of the casting mould is provided, wherein
o the coating installation is provided on the handling installation (14) on which the spray installation (16) is disposed; or
o the coating installation is disposed on a dedicated handling installation (14).

2. Maintenance station (10) according to Claim 1, **characterized in that** a blasting apparatus (17) in which the cleaning medium is stored and which by way of a supply installation (15) is connected to the spray installation (16) is provided.

3. Maintenance station (10) according to either of the preceding Claims 1 or 2, **characterized in that** a noise protection installation (18) is provided.

4. Maintenance station (10) according to one of the preceding Claims 1 to 3, **characterized in that** a suctioning installation (19) is provided.

5. Method for servicing a casting mould using a maintenance station (10) according to one of the preceding claims, said method comprising the following steps:
- removing the casting mould (10) from the casting location;
- transferring the casting mould (10) to the maintenance station (10);
- removing casting remnants which are located on the surface (11a, 12a) of the casting mould (11, 12) by blasting or spraying the surface (11a, 12a) using a cleaning medium, wherein a spray installation (16) is able to be repositioned in a self-acting manner across the mould surfaces (11a, 12a);
- applying a coating to the mould surfaces (11a, 12a); and
- transferring the casting mould (10) to the casting location.

6. Method according to Claim 5, **characterized in that**, upon the removal of a first casting mould (10) from the casting location, a second serviced casting mould is moved into the casting location.

## Revendications

1. Station d'entretien (10) pour des outils de coulée, comprenant un appareil de manipulation (14), sur lequel un appareil de pulvérisation (16) est agencé, un milieu de nettoyage pouvant être pulvérisé avec l'appareil de pulvérisation (16) sur des surfaces de moule (11a, 12a) d'au moins un outil de coulée (13), le milieu de nettoyage étant un mélange d'air comprimé et de particules abrasives,
**caractérisée en ce que**
- les particules abrasives sont configurées sous la forme de particules de glace et/ou de grains de sel,
- l'appareil de manipulation (14) est configuré sous la forme d'un robot, avec lequel l'appareil de pulvérisation (16) peut être déplacé automatiquement sur les surfaces de moule (11a, 12a) de l'outil de coulée, l'appareil de pulvérisation (16) étant relié par l'intermédiaire d'un appareil d'introduction (15) avec un appareil à jet (17), l'appareil à jet (17) comprenant un réservoir, dans lequel les particules abrasives sont stockées, qui peuvent être introduites par l'intermédiaire de l'appareil d'introduction (15) dans l'appareil de pulvérisation (16), et **en ce que**
- un appareil de revêtement est prévu, avec lequel un revêtement peut être appliqué sur la surface (11a, 12a) de l'outil de coulée,
- l'appareil de revêtement étant prévu sur l'appareil de manipulation (14) sur lequel l'appareil de pulvérisation (16) est agencé, ou
- l'appareil de revêtement étant agencé sur un appareil de manipulation séparé (14).

2. Station d'entretien (10) selon la revendication 1, **caractérisée en ce qu'**un appareil à jet (17) est prévu, dans lequel le milieu de nettoyage est stocké et qui est relié par l'intermédiaire d'un appareil d'introduction (15) avec l'appareil de pulvérisation (16) .

3. Station d'attente (10) selon l'une quelconque des revendications 1 ou 2 précédentes, **caractérisée en ce qu'**un appareil de protection acoustique (18) est prévu.

4. Station d'attente (10) selon l'une quelconque des revendications 1 à 3 précédentes, **caractérisée en ce qu'**un appareil d'aspiration (19) est prévu.

5. Procédé d'entretien d'un outil de coulée avec une station d'entretien (10) selon l'une quelconque des revendications précédentes, comprenant les étapes suivantes :
- l'enlèvement de l'outil de coulée (10) de l'emplacement de coulée ;
- le transfert de l'outil de coulée (10) vers la station d'entretien (10) ;
- l'enlèvement de résidus de coulée, qui se trouvent sur la surface (11a, 12a) de l'outil de coulée (11, 12), par projection ou pulvérisation d'un milieu de nettoyage sur la surface (11a, 12a), un appareil de pulvérisation (16) pouvant être déplacé automatiquement sur les surfaces de moule (11a, 12a) ;
- l'application d'un revêtement sur les surfaces d'outil (11a, 12a) et
- le transfert de l'outil de coulée (10) vers l'emplacement de coulée.

6. Procédé selon la revendication 5, **caractérisé en ce qu'**après l'enlèvement d'un premier outil de coulée (10) de l'emplacement de coulée, un deuxième outil de coulée entretenu est disposé à l'emplacement de coulée.
